Europäisches Patentamt

European Patent Office

Office européen des brevets

(19)

(11) Veröffentlichungsnummer: **0 011 216**
**B1**

(12)

# EUROPÄISCHE PATENTSCHRIFT

(45) Veröffentlichungstag der Patentschrift:
**23.04.86**

(21) Anmeldenummer: **79104323.5**

(22) Anmeldetag: **06.11.79**

(51) Int. Cl.⁴: **C 08 G 18/68**, C 09 J 3/00,
C 08 F 283/00

(54) **Härtbare Massen, Verfahren zum Herstellen von Formkörpern daraus und deren Verwendung.**

(30) Priorität: **08.11.78 DE 2848401**

(43) Veröffentlichungstag der Anmeldung:
**28.05.80 Patentblatt 80/11**

(45) Bekanntmachung des Hinweises auf die Patenterteilung:
**23.04.86 Patentblatt 86/17**

(84) Benannte Vertragsstaaten:
**DE**

(56) Entgegenhaltungen:
**FR - A - 2 273 831**

**Die Akte enthält technische Angaben, die nach dem Eingang der Anmeldung eingereicht wurden und die nicht in dieser Patentschrift enthalten sind.**

(73) Patentinhaber: **Kiessling, Hans-Joachim, Dr.,
Eppenhainer Weg 20a, D-6239 Eppstein/Taunus (DE)**

(72) Erfinder: **Kiessling, Hans-Joachim, Dr., Eppenhainer
Weg 20a, D-6239 Eppstein/Taunus (DE)**

ACTORUM AG

## Beschreibung

Die Erfindung bezieht sich auf härtbare Massen und auf Verfahren zum Herstellen von Formkörpern, insbesondere Klebungen.

Es sind Lösungen bekannt, die zur Herstellung von Überzügen, Lacken und Verklebungen geeignet sind und sich durch einen Gehalt an Polyhydroxyverbindungen, Polyisocyanaten und polymerisationsfähigen Vinylverbindungen als Lösungsmittel auszeichnen. Als Polyhydroxyverbindung werden Polyester aus Polycarbonsäuren und mehrwertigen Alkoholen angesehen, die mit den Polyisocyanaten in Gegenwart von Vinylverbindungen reagieren können. Die Reaktion wird durch Mitverwendung tertiärer Amine wesentlich beschleunigt (DBP 951729). Es ist weiterhin ein Verfahren zur Herstellung von Überzügen, Haftschichten, Formkörpern und Kittmassen auf Basis von Isocyanatgruppen aufweisenden ungesättigten Polyestern bekannt, bei dem man eine Lösung eines Isocyanatgruppen enthaltenden ungesättigten Polyesterurethans, bei dem die OH-Gruppen vollständig mit Isocyanatgruppen umgesetzt worden sind, in polymerisierbaren Vinylmonomeren, die gegebenenfalls noch inerte Lösungsmittel und Reaktionsbeschleuniger und/oder weiteres Polyisocyanat enthalten, mit einer Hydroxylgruppen aufweisenden höhermolekularen gesättigten Verbindung, die einen Härtungskatalysator zugemischt enthält, vereinigt und zur Reaktion bringt (DE-OS 1694196). Derartige Zusammensetzungen haben jedoch den Nachteil, dass die Eigenschaften vor und nach der Härtung unzureichend sind. Beispielsweise ermöglichen die nach DBP 951729 und DE-OS 1694196 hergestellten härtbaren Massen keine Schnellverklebungen, die im ausgehärteten Zustand Zugscherfestigkeitswerte über 15, vorzugsweise über 30 N/mm² aufweisen.

Aus der US-Patentschrift 3.994.764 ist auch ein Härtungsverfahren bekannt, bei dem eine Klebstoffkombination aus einem nichtreaktiven, thermoplastischen Polyurethan, gelöst in einer polymerisierbaren Kombination eines Acrylmonomeren und eines polymerisierbaren Säuremonomeren, das mit dem Acrylmonomeren copolymerisierbar ist, und einem Polymerisationskatalysator auf eine zu verklebende Seite eines Gegenstandes aufgebracht und dieses beschichtete Substrat mit einem anderen Substrat in Kontakt gebracht wird, wobei dieses andere Substrat mit einer Aktivatorlösung für den in der Klebstoffkombination befindlichen Katalysator beschichtet ist. Nachdem das Lösungsmittel verdunstet ist, werden beide Substrate so lange unter Druck in Kontakt gebracht, bis eine Klebstoffbindung hergestellt ist. Die Hitzebeständigkeit derartiger Klebstoffbindungen kann durch die Zumischung eines nicht reaktiven Epoxydharzes zu dem Klebstoff verbessert werden.

Als Nachteil bei diesen bekannten Klebstoffkombinationen wird angesehen, dass sie noch nicht alle Anforderungen für die Herstellung von Klebungen, die sofort eine ausreichende Festigkeit haben, erfüllen; z.B. bereitet die Entfernung von nichtreaktiven Lösungsmitteln wie Methanol bei der praktischen Handhabung Schwierigkeiten.

Aus der französischen Patentanmeldung FR-A-2 273 831 sind härtbare Massen bekannt, die aus Hydroxylgruppen tragenden ungesättigten Polyestern mit einer OH-Zahl von 200–1000, vorzugsweise 300–600, einem Molekulargewicht von 200–800, vorzugsweise 200–600 und einem Doppelbindungsgehalt von 0,1–0,5, vorzugsweise 0,15–0,45 Äquivalenten pro 100 g Harz, ungesättigten polymerisierbaren Vinylmonomeren, Polyisocyanaten, Katalysatoren, Beschleunigern und üblichen Additiven bestehen und die zur Herstellung von Formkörpern oder Verklebungen geeignet sind. Das Beispiel 1 beschreibt eine Zusammensetzung enthaltend einen aus Maleinsäureanhydrid und Propylenglykol gewonnenen Polyester mit MG 530 und Gegenstand der Erfindung ist eine härtbare Masse auf der Grundlage von

A) mindestens einer ungesättigten, Estergruppen enthaltenden Verbindung mit freien Hydroxylgruppen,

B) mindestens einer polyfunktionellen Verbindung, die mindestens eine freie oder verkappte Isocyanatgruppe aufweist,

C) mindestens einem polymerisierbaren Vinylmonomeren,

D) mindestens einem, freie Radikale erzeugenden Polymerisationskatalysator und

E) mindestens einem Beschleuniger und gegebenenfalls weiteren üblichen Zusätzen,
dadurch gekennzeichnet, dass, bezogen auf die Summe A + B + C die Komponente A) in Mengen von 25 bis 80 Gewichtsprozent, die Komponente B) zu mindestens 3 Gewichtsprozent, die Komponente C zu 7 bis 60 Gewichtsprozent, die Komponente D) in Mengen von 0,05 bis 5 Gewichtsprozent und die Komponente E) in Mengen von 0,01 bis 2 Gewichtsprozent enthalten sind und

die Summe des zur Herstellung von Polyesterurethanen A) verwendeten und des als Komponente B) eingebrachten Isocyanats jedoch 30 Gewichtsprozent nicht überschreiten soll und dass die Komponente A) ein ungesättigtes Polyesterurethan mit freien Hydroxylgruppen ist, das in einer Mehrstufenreaktion hergestellt worden ist, indem entweder $\alpha$) zunächst ein Reaktionsprodukt I) mit einer Säurezahl unter 30, vorzugsweise unter 20 hergestellt wird, durch stufenweise Umsetzung von

$a_1$) mindestens einer, Hydroxylgruppen tragenden gesättigten Verbindung aus der Gruppe der Äthylenglykol- bzw. Propylenglykolpolyäther, Polyäther auf Epoxydharz- und Polyphenolbasis,

Polyestern auf Basis von aliphatischen oder aromatischen Polycarbonsäuren, wobei polymerisierte ungesättigte Fettsäuren eingeschlossen sind, mit zwei- bis vierwertigen Alkoholen und

natürlich vorkommenden Veresterungsprodukten OH-gruppenhaltiger, langkettiger gesättigter oder ungesättigter Fettsäuren mit dreiwertigen Alkoholen

$a_2$) mindestens 0,8 Mol mindestens eines ungesättigten Polycarbonsäureanhydrids pro Hydroxylgruppe

in erster Stufe zu einem Halbester und anschliessende Umsetzung des Halbesters in zweiter Stufe mit

$a_3$) mindestens einer Epoxyverbindung, wobei das Äquivalenzverhältnis von Epoxyd:COOH grösser als 1,1:1 ist (Reaktionsprodukt I) oder

β) durch Mischen dieses Reaktionsproduktes I) mit einem Reaktionsprodukt II), das seinerseits durch Veresterung von ungesättigten Polycarbonsäuren aus der Gruppe der Maleinsäure, Fumarsäure, Aconitsäure, Mesaconsäure, Citraconsäure, Itaconsäure und/oder Chlormaleinsäure und gegebenenfalls zusätzlichen gesättigten Polycarbonsäuren oder jeweils der möglichen Anhydride mit einem Überschuss von mehrwertigen Alkoholen, vorzugsweise zwei bis vierwertigen Alkoholen hergestellt worden ist, wobei mindestens einer der beiden Reaktionspartner von II) bifunktionell ist und gegebenenfalls der Überschuss der mehrwertigen Alkohole entfernt wird, eine Mischung hergestellt wird mit einem Anteil des Reaktionsproduktes II) von 1 bis 30 Gew.-% bezogen auf die Gesamtmenge der Produkte I) und II)

und dass dann bis zu 20 Äquivalentprozent der in dem Reaktionsprodukt I) oder dessen Mischung mit Reaktionsprodukt II) enthaltenen OH-Gruppen mit Isocyanatgruppen tragenden polyfunktionellen Verbindungen umgesetzt werden.

Gegenstand der Erfindung ist auch ein Verfahren zur Herstellung von Formkörpern, worunter auch Flächengebilde wie Überzüge und Haftschichten sowie Verkittungen verstanden werden, aus einer Mischung α der vorgenannten Komponenten A bis D mit einer Mischung β aus den Komponenten A bis C und E.

Ein besonders vorteilhaftes Verfahren besteht darin, dass in einer 2-Komponenten-Spritzanlage auf einer der zu verklebenden Seiten eines Substrates die Mischung α und auf der anderen der zu verklebenden Seiten die Mischung β aufgetragen wird und beide Substrate unter leichtem Druck zusammengefügt werden.

In der ersten Stufe der Arbeitsweise zur Herstellung von $A_1$) werden pro Hydroxylgruppe der Hydroxylgruppen tragenden Verbindungen im allgemeinen 0,9–1,5 mol, vorzugsweise 1,1–1,3 mol mindestens eines ungesättigten Polycarbonsäureanhydrids eingesetzt. Ein derart aufgebauter Halbester besitzt die Doppelbindungen in der Nähe der Kettenenden. Die Carboxylgruppen des Halbesters werden anschliessend mit Epoxydverbindungen, z.B. Äthylenoxyd, Propylenoxyd oder Epichlorhydrin bis zu Säurezahlen unter 30, vorzugsweise unter 20 umgesetzt. Diese Umsetzungen werden im allgemeinen so durchgeführt, dass die Addition des ungesättigten Polycarbonsäureanhydrids an die Hydroxylgruppen der gesättigten Verbindung, abhängig von der Reaktivität der Hydroxylgruppen, bei 60–150°C, vorzugsweise bei 100–130°C und die danach erfolgende Umsetzung mit den Epoxydverbindungen unterhalb 140°C, vorzugsweise unterhalb 100°C erfolgt. Mit niedrigsiedenden Epoxydverbindungen wie Äthylenoxyd oder Propylenoxyd, die bevorzugt eingesetzt werden, führt man die Veresterung der Carboxylgruppen mit einem Überschuss dieser Verbindungen, zweckmässig im geschlossenen System unter Überdruck aus, bis die gewünschte niedrige Säurezahl erreicht ist. Die überschüssig angewandte Menge an Epoxydverbindungen wird zweckmässig unter 120°C, vorzugsweise unter 90°C bei Normal- oder vermindertem Druck abdestilliert. Um eine möglichst rasche Veresterung der Carboxylgruppen des Halbesters zu erreichen, muss man im allgemeinen ein Äquivalentverhältnis von Epoxyd:COOH von mehr als 1,1, vorzugsweise von mehr als 1,5:1 anwenden.

Wenn als ungesättigtes Polycarbonsäureanhydrid das vorzugsweise eingesetzte Maleinsäureanhydrid angewandt wird, so erhält man ungesättigte Polyesterharze, die überwiegend Maleinsäureestergruppen enthalten und die deshalb als ungesättigte Polyester vom Maleinsäureestertyp bezeichnet werden. Die auf diese Weise erhaltene Komponente $A_1$) erfüllt bei Auswahl reaktiver Monomerer als Komponente C) im allgemeinen die für das erfindungsgemässe Verfahren und die für die erfindungsgemässen härtbaren Massen geforderten Voraussetzungen. Um jedoch auch mit weniger reaktiven Monomeren sehr kurze Härtungszeiten für die härtbare Masse zu erreichen, kann dieser ungesättigte Polyester vom Maleinsäureestertyp – im folgenden mit $A_1$ – Reaktionsprodukt I (= $A_1$/I) bezeichnet – mit einem Polyester gemischt werden, der einen hohen Anteil an Fumarsäureesterdoppelbindungen enthält – im folgenden mit $A_1$ – Reaktionsprodukt II (= $A_1$/II) bezeichnet. Solche ungesättigten Polyester vom Fumarsäureestertyp $A_1$/II sind vorzugsweise niedermolekulare Produkte mit freien Hydroxylgruppen und werden z.B. durch Veresterung von ungesättigten, und gegebenenfalls zusätzlichen gesättigten, Polycarbonsäuren bzw. deren möglichen Anhydriden mit einem Überschuss von mehrwertigen Alkoholen erhalten. Die Veresterung wird im allgemeinen bis zu einer Säurezahl unter 6, vorzugsweise unter 3 fortgeführt. Bei Verwendung eines deutlichen Überschusses an mehrwertigen Alkoholen wird dieser anschliessend in der Weise entfernt, dass keine bzw. nur eine geringe molekulargewichtsvergrössernde Umesterungsreaktion stattfinden kann, wie weiter unten bei der Herstellung von $A_1$/I ausgeführt wird. Auf diese Weise erhält man Produkte mit enger Molekulargewichtsverteilung. Da die Veresterung der freien Säuren mit den mehrwertigen Alkoholen unter den üblichen Bedingungen, d.h. bei Temperaturen über 150°C, vorzugsweise bei 180–210°C erfolgt, werden auch bei Verwendung von z.B. Maleinsäure bzw. dessen Anhydrid Polyester vom Fumarsäuretyp erhalten, da sich die primär gebildeten Maleinsäureester während der Veresterungsreaktion bei den angewandten hohen Temperaturen umlagern. Diese Umlagerung kann durch bekannte Katalysatoren wie Kaliumjodid oder Jod begünstigt werden.

Die zur Herstellung von $A_1$/I verwendeten Hydroxylgruppen tragenden gesättigten Verbindungen sind niedermolekulare Produkte, die im Molekül mindestens 2 Hydroxylgruppen tragen und keine unter den Härtungsbedingungen des erfindungsgemässen Verfahrens reagierenden C–C-Doppelbindungen enthalten. Etwaige C–C-Doppelbindungen in diesen Verbindungen sind aromatischer Natur oder sind isoliert stehende Doppelbindungen, die mit – durch Polymerisationskatalysatoren erzeugten – Radikalen im Temperaturbereich von 0–150 °C nicht oder nur langsam reagieren.

Geeignete Verbindungen sind z.B. Polyäther wie Reaktionsprodukte von niedermolekularen Epoxydharzen auf Basis Bisphenol A mit Wasser oder aliphatischen Alkoholen R–OH, wobei R einen gesättigten Alkylrest mit 1 bis 12 C-Atomen bedeutet, z.B.

$HO–CH_2–HOCH–CH_2–OC_6H_4–C(CH_3)_2–C_6H_4–O–CH_2–CHOH–CH_2OH$

$ROCH_2–HOCH–CH_2–OC_6H_4–C(CH_3)_2–C_6H_4–O–CH_2–CHOH–CH_2OR$,

oder andere niedermolekulare Polyäther wie

$HO–CH_2–CH_2–OC_6H_4–CH_2–C_6H_4O–CH_2–CH_2OH$,

$HO–CH_2–CH_2–(O–CH_2–CH_2)_n–OCH_2CH_2–OH$

(n = 0 bis 5),

$HO–CH_2–CH(CH_3)–[OCH_2–CH(CH_3)]_n–OCH_2–CH(CH_3)OH$ (n = 0 bis 5),

oder niedermolekulare Polyester auf Basis von ortho-, iso- und/oder Tere-Phthalsäure, z.B.

$HO–CH_2–CH_2–O(OC–C_6H_4–COO–CH_2–CH_2–O)_n–H$

(n = 1 bis 4)

oder natürlich vorkommende Veresterungsprodukte hydroxylgruppenhaltiger langkettiger gesättigter oder ungesättigter Fettsäuren mit dreiwertigen Alkoholen, z.B. Ricinusöl.

Besonders geeignet als Hydroxylgruppen tragende Verbindungen für die Herstellung von $A_1/I$ sind z.B. niedermolekulare Polyester auf Basis von aliphatischen Dicarbonsäuren und Äthylenglykol der Formel

$HO–CH_2–CH_2–O(OC–C_mH_{2m}COO–CH_2–CH_2O)_nH$

worin n = 1 bis 4 und m = 2 bis 10 ist.

Die vorgenannten Verbindungen können auch als Gemische eingesetzt werden.

Bei einer bevorzugten Ausführung der Erfindung werden auch zur Herstellung des Produktes $A_1/I$ niedermolekulare, Hydroxylgruppen tragende gesättigte Verbindungen mit enger Molekulargewichtsverteilung eingesetzt. Die Herstellung solcher Verbindungen, z.B. Polyester, geschieht nach der bereits oben bei der Herstellung der Polyester vom Fumarsäuretyp $A_1/II$ beschriebenen Methode; jedoch wird hier ein deutlicher Alkoholüberschuss gewählt – was auch bei der Herstellung des Produktes $A_1/II$ möglich ist – d.h. das Verhältnis von Hydroxylgruppen zu Carboxylgruppen ist im allgemeinen > 1,8:1, vorzugsweise > 3:1. Die Entfernung des Alkoholüberschusses wird bei einer Temperatur von nicht mehr als 160 °C, vorzugsweise nicht mehr als 130 °C bei normalem oder vermindertem Druck vorgenommen, gegebenenfalls mittels einer azeotropen Destillation, wobei zweckmässig das Schleppmittel unter Berücksichtigung des Siedepunktes des mehrwertigen Alkohols ausgewählt und im Kreislauf geführt wird. Bei Äthylenglykol hat sich Xylol bewährt. Auf diese Art lassen sich Umesterungsreaktionen weitgehend vermeiden. Dabei ist zu bedenken, dass Säurezahlen über 3 Umesterungsreaktionen begünstigen und zur Anwendung milderer Bedingungen bei der azeotropen Entfernung der mehrwertigen Alkohole zwingen.

Bei der Umsetzung der Hydroxylgruppen tragenden gesättigten Verbindungen mit ungesättigten Polycarbonsäureanhydriden ist der verschiedenen Reaktivität der Hydroxylgruppen Rechnung zu tragen; z.B. ist die sekundäre Hydroxylgruppe des Ricinusöls weniger reaktiv als primäre Hydroxylgruppen.

«Gesättigte» Polycarbonsäuren, die zur Herstellung der Hydroxylgruppen tragenden gesättigten Verbindungen und auch bei der Herstellung der ungesättigten Polyester vom Fumarsäureestertyp eingesetzt werden, sind beispielsweise Bernsteinsäure, Adipinsäure, Korksäure, Azelainsäure, Sebacinsäure, Brassylsäure, Dimethylbernsteinsäure, ortho-, iso- und Tere-Phthalsäure, Trimellithsäure, Tetrahydrophthalsäure, Hexahydrophthalsäure bzw. deren mögliche Anhydride. Dazu gehören auch die nach bekannten Verfahren polymerisierten ungesättigten Fettsäuren, insbesondere die di- bzw. trimeren Fettsäuren und deren Hydrierungsprodukte. Polymerisierbare ungesättigte Fettsäuren fallen u.a. bei der Verseifung natürlich vorkommender Öle mit einer mittleren Kettenlänge von 18 C-Atomen an. Adipinsäure wird als gesättigte Polycarbonsäure bevorzugt eingesetzt.

Ungesättigte Polyester vom Fumarsäureestertyp $A_1/II$ werden jedoch vorzugsweise ohne die anteilige Mitverwendung von gesättigten Polycarbonsäuren hergestellt. Ungesättigte Polycarbonsäureanhydride zur Herstellung des Reaktionsproduktes $A_1/I$ besitzen neben der Anhydridgruppe noch mindestens eine C–C-Doppelbindung, die mit durch Polymerisationskatalysatoren erzeugten Radikalen im Temperaturbereich von 0–150 °C ausreichend schnell reagieren, z.B. die Anhydride der Maleinsäure, Aconitsäure, Citraconsäure, Itaconsäure und Chlormaleinsäure. Bevorzugt wird Maleinsäureanhydrid verwendet.

Als ungesättigte Polycarbonsäuren bei der Herstellung der ungesättigten Polyester vom Fumarsäureestertyp können Maleinsäure, Fumarsäure, Aconitsäure, Mesaconsäure, Citraconsäure, Itaconsäure und/oder Chlormaleinsäure sowie deren mögliche Anhydride eingesetzt werden. Bevorzugt wird Maleinsäureanhydrid und/oder Fumarsäure verwendet.

Mehrwertige Alkohole, die zur Herstellung der Hydroxylgruppen tragenden Verbindungen vom Polyestertyp oder zur Herstellung der ungesättigten Polyester vom Fumarsäuretyp geeignet sind, sind z.B. Äthylenglykol, 1,2- und 1,3-Propandiol, 1,2-, 1,3-, 2,3- und 1,4-Butandiol, Glycerin, Trimethyloläthan und -propan, Pentaerythrit und Neopentylglykol. Vorzugsweise wird Äthylenglykol allein verwendet. Es können aber auch Gemische der verschiedenen Diole eingesetzt werden.

Zur Herstellung der Polyesterurethane A werden bis zu 20 Äquivalent %, vorzugsweise 5–15 Äquivalent % der in den niedermolekularen ungesättigten Polyestern A₁) enthaltenen OH-Gruppen, mit Isocyanatgruppen tragenden polyfunktionellen Verbindungen, z.B. Polyisocyanaten, in ungesättigte Polyesterurethane A) umgewandelt. Die für diese Kettenverlängerung benötigte Menge an Isocyanatgruppen tragenden Verbindungen hängt ab von dem NCO-Gehalt und der Funktionalität dieser Verbindungen sowie von der Hydroxylzahl des niedermolekularen ungesättigten Polyesters.

Isocyanatgruppen tragende polyfunktionelle Verbindungen, die als Komponente B in der härtbaren Masse und für die Herstellung der ungesättigten Polyesterurethane A) verwendet werden, sind z.B. Toluylen-2,4-diisocyanat, Toluylen-2,6-diisocyanat, Diphenylmethan-4,4'-diisocyanat, Triphenylmethan-4,4',4''-triisocyanat, Naphthylen-1,5-diisocyanat, Xylylen-diisocyanate, 1,1'-Dinaphthyl-2,2'-diisocyanat, Biphenyl-2,4'-diisocyanat, Biphenyl-4,4'-diisocyanat, Benzophenon-3,3'-diisocyanat, 1-Methylbenzol-2,4,6-triisocyanat, Naphthalin-1,3,7-triisocyanat, 1-Isopropylbenzol-2,4-diisocyanat, Diphenyläther-2,4'-und-4,4'-diisocyanat, Hexamethylendiisocyanat, Cyclohexan-1,2-diisocyanat, Cyclohexylen-1,4-diisocyanat und Polyisocyanate vom Typ

$$NCO-C_6H_4-(CH_2-C_6H_3-NCO)_n-CH_2-C_6H_4-NCO$$

mit verschiedenen Verknüpfungen zwischen den aromatischen Ringen und den $CH_2$-Brücken; n bedeutet eine Zahl von 0–10. Meist werden die im Handel befindlichen Polyisocyanate eingesetzt, die oft Gemische der angeführten Verbindungen enthalten.

Anstelle der Polyisocyanate können z.B. auch ihre Isocyanatgruppen enthaltenden Umsetzungsprodukte mit mehrwertigen Alkoholen Verwendung finden, beispielsweise das Umsetzungsprodukt von 1 mol Trimethylolpropan mit 3 mol Toluylen-diisocyanat, ferner trimerisierte oder polymerisierte Isocyanate oder Polyisocyanate, wie sie etwa in der deutschen Patentschrift 951 168 beschrieben sind. Ausserdem kommt auch ein Umsetzungsprodukt aus 1 mol Wasser und 3 mol Hexamethylendiisocyanat mit einem NCO-Gehalt von 16–17 Gew.-% in Frage.

Als Komponente B werden vorzugsweise solche Polyisocyanate oder Gemische davon eingesetzt, die bei Raumtemperatur nicht flüchtig sind, wie Diphenylmethan-4,4'-diisocyanat und Polyisocyanate vom Typ

$$NCO-C_6H_4-(CH_2-C_6H_3-NCO)_n-CH_2-C_6H_4-NCO.$$

Die als Komponente B verwendeten Polyisocyanatgruppen tragenden polyfunktionellen Verbindungen können auch in teilweise oder vollständig verkappter Form vorliegen, d.h. das Polyisocyanat wird vor der Verwendung als Komponente B mit einem geeigneten Verkappungsmittel umgesetzt. Als Verkappungsmittel besonders geeignet sind nicht oder wenig flüchtige Verbindungen, die mit der Isocyanatgruppe reagieren und die Reaktivität der Isocyanatgruppe mit den Hydroxylgruppen bei Raumtemperatur blockieren. Wenn in Komponente B alle Isocyanatgruppen verkappt sind, erreicht man lagerstabile Mischungen der Komponenten A und B. Die Bindung zwischen Isocyanatgruppe und Verkappungsmittel soll sich jedoch bei höheren Temperaturen lösen, damit dann die vernetzende Reaktion zwischen Isocyanat- und Hydroxylgruppen eintreten kann. Da das Verkappungsmittel in der gehärteten Masse, d.h. beispielsweise in Formkörpern oder in der Klebfuge verbleibt, muss es wenig flüchtig sein oder bei der vernetzenden Reaktion chemisch eingebaut werden, um beim Härtungsvorgang bei erhöhter Temperatur keine Risse oder Blasen zu erzeugen. Als Verkappungsmittel werden die üblicherweise für die Verkappung verwendeten Verbindungen wie Laktame, z.B. ξ-Caprolactam oder geeignete Diketone, z.B. Benzoylaceton eingesetzt. Es können auch spezielle phenolische OH-Gruppen enthaltende Verbindungen als Verkappungsmittel verwendet werden, jedoch ist dann darauf zu achten, dass die phenolischen OH-Gruppen vollständig mit den Isocyanatgruppen reagiert haben und keine – die Polymerisation der Doppelbindungen inhibierenden – Produkte in die härtbare Masse eingeschleppt oder beim radikalischen Härtungsprozess abgespalten werden.

Die freien bzw. freigesetzten Isocyanatgruppen nehmen am Härtungsvorgang bei höheren Temperaturen teil und erhöhen die Vernetzungsdichte der härtbaren Massen.

Bei Verwendung von vollständig verkappten Isocyanatgruppen tragenden Verbindungen als Komponente B lassen sich härtbare Massen aus 2 lagerstabilen Komponenten formulieren, die beim Zusammenfügen zwar sofort durch die Polymerisation verkleben, während die vollständige Aushärtung durch anschliessendes Tempern bei erhöhter Temperatur erreicht wird. Um bei Raumtemperatur aushärtende Formkörper zu erhalten, werden als Komponente B vorzugsweise nicht verkappte Isocyanatgruppen tragende polyfunktionelle Verbindungen eingesetzt.

Eine bevorzugte Ausführungsform der härtbaren Massen für den Einsatz beim Klebeverfahren, die hervorragende klebtechnische Eigenschaften nach Aushärtung der Klebfuge erzielt, ist der Einsatz ungesättigter Adipinsäure-Äthylenglykol-Polyesterurethane vom Maleinsäureestertyp, hergestellt mit den handelsüblichen isomeren Gemischen des Toluylendiisocyanat-2,4 (65–80 Gew.-%) und -2,6 (20–35 Gew.-%) oder des Diphenylmethandiisocyanats, die gegebenenfalls noch höhermolekulare Isocyanate enthalten.

Polymerisierbare Vinylmonomere C sind z.B. Styrol, Acrylsäure und/oder Methacrylsäure sowie deren Ester von ein- oder mehrwertigen Alkoholen mit 1 bis 8 C-Atomen einzeln oder im Gemisch. Im einzelnen seien genannt: Methyl-, Äthyl-, Propyl- und tert.- oder iso-Butyl-, Hexyl- und Äthylhexylacrylat und -methacrylat, ferner z.B. Hydroxyäthyl- und Hydroxypropylacrylat und -methacrylat sowie Verbindungen vom Typ Alkylenglykoldiacrylat und -dimethacrylat, wie Butylen-1,4-dimethacrylat, ferner Trimethylolpropantriacrylat.

Freie Radikale erzeugende Polymerisationskatalysatoren D sind Peroxydverbindungen, beispielsweise Benzoylperoxyd, Cumolhydroperoxyd, di-tert.-Butylperoxyd, Dilaurylperoxyd, tert.-

Butylhydroperoxyd, Dicumylperoxyd, Dibenzoylperoxyd, tert.-Butylhydroperoxyd, tert.-Butylperbenzoat, tert.-Butylperoctoat, tert.-Butylperisononanat.

Als Beschleuniger E) werden Amine, vorzugsweise sekundäre und tertiäre Amine, wie Dimethylanilin, substituierte Dimethylaniline und Mono-, Di- und Trialkyl- oder Alkylarylamine, z.B. Triäthylamin verwendet.

Die erfindungsgemässen Massen eignen sich ganz besonders zur Herstellung von Klebstoffsystemen, da man Klebungen erhält, die sofort anziehen, d.h. sofort eine genügende Festigkeit haben und im Endzustand der Härtung hohe Zugscherfestigkeitswerte aufweisen. Bei der Ausübung dieses neuen Klebeverfahrens ist die Klebfuge bereits nach weniger als 15 Minuten, meistens nach weniger als 5 Minuten mit 10 g/cm² belastbar und erreicht im Endzustand der Härtung bei Raumtemperatur gemessene Zugscherfestigkeitswerte über 15, vorzugsweise über 30 N/mm².

In einer Durchführung des neuen Verfahrens werden die Komponenten A, B und C gemischt und die Mischung geteilt. Dem einen Teil wird die Komponente D und dem anderen Teil die Komponente E zugefügt und die beiden Mischungen jeweils getrennt auf die eine bzw. auf die andere zu verklebende Fläche aufgebracht. Weist die Komponente B freie Isocyanatgruppen auf, können die beiden beschichteten Flächen in diesem Zustand 30–60 Minuten gelagert werden; sind die Isocyanatgruppen verkappt, ist eine tagelange Lagerung möglich. Zumindest innerhalb dieser Zeiten laufen keine die Verklebung störenden Härtungsreaktionen ab. Erst beim Zusammenfügen der beiden zu verklebenden Flächen zieht der Klebstoff in beiden Fällen an, d.h. die beiden Flächen haften nach weniger als 15 Minuten, meistens nach weniger als 5 Minuten aneinander, wobei die Klebfuge dann bei Raumtemperatur mit über 10 g/cm², vorzugsweise mit über 50 g/cm² belastbar ist. Wenn eine Komponente B mit freien Isocyanatgruppen verwendet wurde, werden z.B. nach 4 Tagen Lagerung bei Raumtemperatur an der Klebfuge die oben angeführten Zugscherfestigkeitswerte gemessen. Diese hohen Werte werden auch in der Praxis unter erschwerten Bedingungen erreicht, da z.B. ungleichmässige Harzbeschichtungen auf den zu verklebenden Flächen den Ablauf der Härtungsreaktion nicht beeinflussen. Die Verklebungen sind thermisch belastbar.

In einer weiteren Ausführungsform des Verfahrens bei Verwendung von Verbindungen mit freien Isocyanatgruppen als Komponente B werden diejenigen Komponenten des erfindungsgemässen Klebstoffsystems miteinander kombiniert, die eine ausreichende Lagerstabilität aufweisen. Dadurch wird die nötige Sicherheit gewährleistet und ein reibungsloser Ablauf bei Serienverklebungen, z.B. von Metallblechen erreicht. Günstig ist es in diesem Falle, die Komponenten A und B getrennt zu halten. Der Auftrag der Mischungen erfolgt dann in Zweikomponenten-Spritzanlagen. Das polymerisierbare Vinylmonomere C kann zur Komponente A oder zur Komponente B gegeben wer

den. In den meisten Fällen wird jedoch das Vinylmonomere zur Herabsetzung der Viskosität der Komponente A benützt, wobei eine Polymerisation während der Lagerung bei Raumtemperatur oder tieferen Temperaturen durch Zusätze von Inhibitoren wie Hydrochinon, Toluhydrochinon, Benzochinon und/oder Phenothiazin in Mengen von 20 bis 600 mg, vorzugsweise 100 bis 300 mg je 1000 g der Komponentenmischung A und C verhindert wird.

Bei Verwendung der erfindungsgemässen härtbaren Massen kann es zweckmässig sein, die Aushärtung des bei Raumtemperatur vorgehärteten Formteils oder die Aushärtung der bei Raumtemperatur vollzogenen Verklebung bei höheren Temperaturen vorzunehmen. Dies trifft beispielsweise zu, wenn nach dem Verkleben von Stahlblechen diese Teile mit einem Einbrennlack versehen werden sollen, so dass die Klebfuge während des Einbrennvorganges längere Zeit auf höhere Temperaturen erhitzt wird. In diesem Fall kann das erfindungsgemässe Verfahren z.B. zur Herstellung von Haftschichten vorteilhaft mit einer solchen Komponente B ausgeübt werden, deren Isocyanatgruppen vollständig verkappt sind, die dann bei der erhöhten Temperatur wieder aufgespalten werden. Dadurch vereinfacht sich die Auftragsweise der erfindungsgemässen härtbaren Massen auf die zu verklebenden Stahlbleche, da die vollständig verkappten Verbindungen mit den Hydroxylgruppen enthaltenden ungesättigten Polyesterharzen bei Raumtemperatur nicht reagieren und über längere Zeit lagerstabil sind. Der Auftrag kann in diesem Fall mit zwei Einkomponenten-Spritzanlagen erfolgen, die jeweils die Mischung der Komponenten A, B, C und D oder die Mischung der Komponenten A, B, C und E auf die zu verklebenden Flächen bringen. Nach dem bei 130–200 °C ablaufenden Einbrennvorgang werden hohe Zugscherfestigkeitswerte erreicht. Erschwerte Praxisbedingungen, beispielsweise ungleichmässige Beschichtungen beeinflussen nicht den Ablauf der Härtungsreaktion.

In einer weiteren Ausführungsform der Verarbeitung der erfindungsgemässen härtbaren Massen können die Komponenten D) oder E) in einem Teil der polymerisierbaren Vinylmonomeren C) gelöst und in Form dieser Lösung auf eine der zu beschichtenden Flächen aufgetragen werden, wobei der Lösung gegebenenfalls ein Verdickungsmittel zur schwachen Erhöhung der Viskosität zugesetzt wird.

Die restlichen Komponenten der Gesamtmischung sowie der Rest der Komponente C werden gesondert gemischt, auf die andere Fläche aufgebracht und die Teile wie beschrieben zusammengefügt.

Für die Verarbeitung der erfindungsgemässen härtbaren Massen ist deren Viskosität von entscheidender Bedeutung. So ist eine niedrige Viskosität vorteilhaft für die Herstellung von Überzügen und für Verklebungen, die z.B. mit Spritzpistolen durchgeführt werden, weil dadurch die Verarbeitung erleichtert und ein gleichmässiger Auftrag auf die zu beschichtenden bzw. zu verklebenden Flächen begünstigt wird.

Die Viskosität der Komponente A hängt hauptsächlich vom Molekulargewicht und der Molekulargewichtsverteilung der Hydroxylgruppen tragenden gesättigten Verbindung ab, da deren stufenweise Umsetzung mit ungesättigten Polycarbonsäureanhydriden und Epoxydverbindungen so durchgeführt wird, dass dabei keine wesentliche Erhöhung des Molekulargewichts eintritt. Sie ist ferner abhängig von der Art der einzelnen Ausgangsstoffe und der zur Kettenverlängerung angewandten Polyisocyanatmenge.

Die Komponenten B und C liegen meist niedermolekular vor, so dass sie die Viskosität der härtbaren Masse herabsetzen. Bei der Festlegung der Menge ist zu berücksichtigen, dass insbesondere bei einem hohen Anteil an polymerisierbaren Monomeren unter anderem ein störender Schrumpf der Masse beim Härtungsvorgang hervorgerufen werden kann.

Der Polymerisationskatalysator D und der Beschleuniger E können z.B. jeweils in Form von Stammlösungen der Komponente A oder B zugegeben werden.

Die erfindungsgemässen härtbaren Massen eignen sich zur Herstellung harter oder zähelastischer Formkörper mit sehr guten mechanischen Eigenschaften. Ein besonderer Vorteil ist, dass das Formteil nach wenigen Minuten Vorhärtung aus der Form herausgenommen werden und die Aushärtung durch Lagerung bei Raumtemperatur oder bei höheren Temperaturen durchgeführt werden kann. Die Art der Aushärtung ist abhängig von der Auswahl der Komponente B.

Bei der Verklebung unter Einsatz der erfindungsgemässen Mischungen hängt die Zeit bis zur Belastbarkeit der Klebfuge – Anziehzeit genannt – von der Gelierzeit des erfindungsgemässen Klebstoffsystems ab. Sie wird unter anderem beeinflusst von den verwendeten Monomeren und vom Fumarsäureestergehalt im ungesättigten Polyesterurethan. Wird eine sehr kurze Anziehzeit angestrebt und kann diese durch die Monomerenauswahl nicht erreicht werden, so kann dem ungesättigten Polyesterurethan, das die besten klebtechnischen Endwerte ergibt, in einem Anteil von 1 bis 30, vorzugsweise von 3 bis 10 Gew.-% ungesättigter Polyester vom Fumarsäureestertyp $A_1/II$, bezogen auf die Gesamtmenge an ungesättigten Polyestern vom Malein- und Fumarsäuretyp zugesetzt werden, bis die gewünschte kurze Gelierzeit erreicht ist. Im allgemeinen lässt sich die Anziehzeit aus der Gelierzeit errechnen. So beträgt die Anziehzeit bei einer Gelierzeit von 1 Minute etwa 2 Minuten.

Für die klebtechnischen Werte ist nicht nur der Aufbau der Komponente $A_1$ von Bedeutung, sondern auch Art und Menge an eingesetzten Monomeren C). Besonders wirksam ist die Mitverwendung von Acryl- und/oder Methacrylsäure in einem Anteil von bis zu 80, vorzugsweise von 5–50 Gew.-%, bezogen auf die Gesamtmenge der eingesetzten Monomeren.

Die Summe des zur Herstellung von Polyesterurethanen A verwendeten und des als Komponente B eingebrachten Isocyanats liegt vorzugsweise zwischen 10 und 25 Gew.-%.

Besonders vorteilhaft sind Systeme, die 40–70 Gew.-% der Komponente A), 7–25 Gew.-% der Komponente B), 12–40 Gew.-% der Komponente C), 0,5–3,5 Gew.-% der Komponente D) und 0,1–1 Gew.-% der Komponente E) enthalten.

Der Anteil der Komponente B in der erfindungsgemässen härtbaren Masse ist abhängig von der Art des ungesättigten Polyesterurethans A. Der Einsatz eines Polyesterurethans A, das durch die Kettenverlängerung ein relativ hohes Molekulargewicht und eine erniedrigte OH-Zahl aufweist, bedingt einen geringeren Anteil der Komponente B in der Masse. Ausserdem muss der Monomerenanteil C zur Einstellung der Viskosität erhöht werden. Wurde bei Herstellung des Polyesterurethans A nur eine geringe Menge an Polyisocyanaten verwendet, muss in der erfindungsgemässen härtbaren Masse ein grösserer Anteil der Komponente B zur Umsetzung mit den freien OH-Gruppen vorhanden sein.

In den folgenden Beispielen bedeutet T Gewichtsteile, alle Prozentangaben sind Gewichtsyprozent.

Beispiele

A) Herstellung der ungesättigten Polyester vom Typ Maleinsäureester $A_1/I$

1. Stufe: 1 mol gesättigte Polycarbonsäure und/ oder deren Anhydride werden mit 4 mol Äthylenglykol unter destillativer Entfernung des sich bildenden Wassers bei 180–210 °C bis zur Säurezahl unter 3 verestert. Danach wird das Reaktionsgefäss allmählich unter vermindertem Druck gesetzt, das überschüssige Äthylenglykol teilweise abdestilliert und dabei die Temperatur der Reaktionsmischung auf 125 bis 130 °C gesenkt, ein Gemisch aromatischer Kohlenwasserstoffe mit einem bei Normaldruck liegenden Siedebereich von 145 bis 150 °C zugegeben und das restliche Äthylenglykol im Azeotropkreislauf entfernt. Die Lösungsmittelmenge und der Druck wird so gewählt, dass bei der vorgegebenen Temperatur der Reaktionsmischung von 125 bis 130 °C ein kräftiger Azeotropkreislauf eingestellt wird, wobei das sich in der Vorlage als untere Phase abscheidende überschüssige Äthylenglykol abgezogen wird. Diese azeotrope Kreislaufdestillation unter vermindertem Druck wird solange fortgesetzt, bis praktisch keine weitere Phase mehr abgeschieden wird.

2. Stufe: Zu dieser in der ersten Stufe hergestellten gesättigten Verbindung, die Hydroxylgruppen trägt, werden pro Hydroxyläquivalent 1,1 mol Maleinsäureanhydrid bei 120 °C zugegeben und der Reaktionsansatz für 2 Stunden bei dieser Temperatur belassen. Danach wird der Ansatz abgekühlt und unter Druck bei 90 °C mit Propylenoxyd umgesetzt, wobei zunächst 1,5 mol Propylenoxyd pro Carboxylgruppenäquivalent und, falls die Säurezahl noch nicht unter 20 gefallen ist, weiteres Propylenoxyd zugegeben wird.

Nachdem eine Säurezahl unter 20 erreicht worden ist, wird nicht umgesetztes Propylenoxyd unter vermindertem Druck entfernt, wobei die Temperatur im Reaktionsansatz 80 °C nicht übersteigen soll.

In der Tabelle 1 sind die nach diesem Verfahren hergestellten Polyester angeführt. Im Versuch A4) wird anstelle des Umsetzungsproduktes aus gesättigten Polycarbonsäuren und Äthylenglykol Ricinusöl eingesetzt. Die weitere Ausführung der Reaktion erfolgt wie oben beschrieben, jedoch mit der Ausnahme, dass die Dauer der Maleinsäureanhydridumsetzung auf 5 Stunden erhöht wurde.

Tabelle 1

| Versuch | A1 | A2 | A3 | A4 |
|---|---|---|---|---|
| eingesetzte Polycarbon-säure | 1 mol Adipinsäure | dimere +) Fetts. | trimere +) Fetts. | Ricinusöl |
| Hydroxylgruppen tragende gesättigte Verbindung (1. Stufe) | | | | |
| Visk. 20 °C (Gardner) 100% | G–H | – | – | U–V |
| 80% + +) | – | N–O | U+ | – |
| Säurezahl | 0,5 | 2 | 4 | 3 |
| Hydroxylzahl | 370 | 117 | 112 | 162 |
| Festkörpergehalt 20 min/160 °C | 99,1% | >99% | >99% | >99% |
| ungesättigter Polyester vom Maleintyp $A_1/I$ (2. Stufe) | | | | |
| Visk. 20 °C (Gardner) 100% | $Z_3$–$Z_5$ | $Z_5$–$Z_6$ | $Z_6$ | $Z_3$+ |
| 80% + +) | J | U–V | X–Y | O–P |
| Säurezahl | 16 | 17 | 17 | 16 |

+) Dimere- und trimere Fettsäuren sind aliphatische Polycarbonsäuren, hergestellt durch Polymerisation von ungesättigten Fettsäuren mit folgenden Spezifikationen: dimere Fettsäuren (Säurezahl 186 – 194, Verseifungszahl 191 – 199, Markenname ®Empol 1022), trimere Fettsäure Säurezahl 183 – 191, Verseifungszahl 192 – 200, Markenname ®Empol 1040); die eingesetzte Äthylenglykolmenge wird auf die Säurezahl der dimeren bzw. trimeren Fettsäuren bezogen und ein Äquivalentverhältnis OH : COOH von 4 : 1 gewählt.
+ +) 80%ige Lösung in Butylglykol.

B) Herstellung der ungesättigten Polyester vom Typ Fumarsäureester A1/II

1 mol ungesättigte oder eine Mischung ungesättigter und gesättigter Polycarbonsäuren und/oder deren Anhydride werden mit 4 mol Äthylenglykol wie vorstehend unter A) 1. Stufe beschrieben, umgesetzt.

In den Versuchen B1 bis B4 wurden folgende Polycarbonsäureverbindungen verwendet.
B1 = 0,5 mol Adipinsäure und 0,5 mol Maleinsäureanhydrid,
B2 = 0,5 mol Adipinsäure und 0,5 mol Fumarsäure,

B3 = 1 mol Maleinsäureanhydrid,
B4 = 1 mol Fumarsäure

C) Herstellung der ungesättigten Polyesterurethane A

Zu den ungesättigten Polyestern A und B vom Malein- und Fumarsäureestertyp gibt man bei 40 °C die in Tabelle 2 angegebenen Mengen handelsüblicher Toluylendiisocyanat-(2,4)- und -(2,6)-Mischungen (TDI) und hält den Reaktionsansatz solange bei 60 °C, bis der Isocyanatgehalt unter 0,1% gefallen ist.

Tabelle 2

| Versuch | Menge TDI | Polyestermenge aus Versuch Nr. | |
|---|---|---|---|
| C2/A1 | 2 T TDI | 98 T | A 1 |
| C6/A1 | 6 T " | 94 T | A 1 |
| C8/A1 | 8 T " | 92 T | A 1 |
| C10/A1 | 10 T " | 90 T | A 1 |
| C2/A2 | 2 T " | 98 T | A 2 |
| C8/A2 | 8 T " | 92 T | A 2 |
| C4/A3 | 4 T " | 96 T | A 3 |
| C4/A4 | 4 T " | 96 T | A 4 |
| C8/A1/B1 | 8 T " | 87 T A 1 + 5 T B 1 | |
| C8/A1/B2 | 8 T " | 87 T A 1 + 5 T B 2 | |
| C6/A1/B3 | 8 T " | 87 T A 1 + 5 T B 3 | |
| C8/A1/B4 | 8 T " | 87 T A 1 + 5 T B 4 | |

Beispiel 1

Beeinflussung der Gelierzeit und der Anziehzeit eines erfindungsgemässen Klebstoffsystems

76 T des ungesättigten Polyurethans aus Versuch C8/A1 wurden jeweils in 24 T der in der nachstehenden Tabelle 3 angegebenen Monomeren gelöst und 17,6 T der jeweiligen Lösung mit 2,4 T handelsüblichem 4,4'-Diphenylmethandiisocyanat (MDI), 0,8 T Benzoylperoxyd (50%ig) und 0,12 T N,N-Dimethyl-p-toluidin versetzt.

Tabelle 3

| | Gelierzeit bei 20 °C | Anziehzeit |
|---|---|---|
| Methylmethacrylat | 150 s | 300 s |
| Trimethylolpropantriacrylat | 12 s | 24 s |
| Butylen–1,4–dimethacrylat | 10 s | 20 s |
| 20 Teile Styrol und 4 Teile Trimethylolpropan-triacrylat | 82 s | 165 s |

Beispiele 2 bis 5

Der Einfluss des Gehaltes an ungesättigtem Polyester vom Fumarsäureestertyp $A_2$/II in den erfindungsgemässen Klebstoffsystemen wird in Tabelle 4 angeführt. Jeweils 76 T Polyesterurethan werden in 24 T Styrol gelöst, das 0,01 T Toluhydrochinon als Inhibitor enthält und mit 13,6 T MDI, 4,5 T Benzoylperoxyd (50%ig) und 0,7 T N,N-Dimethyl-(p)-Toluidin als Beschleuniger versetzt. Die Gelier- und Anziehzeiten ergeben sich aus Tabelle 4.

Tabelle 4

| Polyesterurethan (Versuch Tab. 2) | entspr. Beispiel | Gelierzeit bei 20 °C | Anziehzeit |
|---|---|---|---|
| C8/A1/B1 | 2 | 120 s | 240 s |
| C8/A1/B2 | 3 | 90 s | 180 s |
| C8/A1/B3 | 4 | 82 s | 150 s |
| C8/A1/B4 | 5 | 50 s | 90 s |

Beispiele 6 bis 22

Die klebtechnischen Eigenschaften der erfindungsgemässen härtenden Massen werden durch Verkleben von Aluminiumblechstreifen bei Raumtemperatur und Prüfung der Zugscherfestigkeit nach 4 Tagen Lagerung bei Raumtemperatur ermittelt (Tabelle 5). Von den eingesetzten ungesättigten Polyesterurethanen kamen je 76 T zur Anwendung. Bei den Beispielen 21 und 22 beträgt die Menge der Polyesterurethane in den Mischungen je 38 T. Als polymerisierbares Monomeres wird in allen Proben Styrol (jeweils 24 T), als Katalysator Benzoylperoxyd (Paste 50%ig, jeweils 5 T) und als Beschleuniger N,N-Dimethyl-(p)-Toluidin (jeweils 0,7 T) eingesetzt. Als Vergleich dient eine Verklebung mit einem handelsüblichen 2-Komponenten-Kleber (® Uhu-Plus), mit dem eine Sofortverklebung nicht möglich ist. Bei allen Prüfungen wurde Kohäsionsbruch beobachtet.

Tabelle 5

| Beisp. | einges., unges. Polyesterurethan (s. Tab. 2) | Polyisocyanat T | Zugscherfestig- keiten N/mm² +) |
|---|---|---|---|
| 6 | C10/A1 | 24 MDI | 16,8 |
| 7 | C10/A1 | 20 " | 17,7 |
| 8 | C10/A1 | 16 " | 22,3 |
| 9 | C10/A1 | 12 " | 17,1 |
| 10 | C 8/A1 | 24 " | 27,8 |
| 11 | C 8/A1 | 20 " | 29,8 |
| 12 | C 8/A1 | 16 " | 29,5 |
| 13 | C 8/A1 | 12 " | 21,6 |
| 14 | C 6/A1 | 24 " | 31,5 |
| 15 | C 6/A1 | 20 " | 32,9 |
| 16 | C 6/A1 | 16 " | 33,7 |
| 17 | C 6/A1 | 12 " | 20,3 |
| 18 | C 2/A1 | 24 " | 15,1 |
| 19 | C 8/A2 | 12 " | 18,6 |
| 20 | C 2/A2 | 16 " | 17,0 |
| 21 | C 8/A1 C 4/A3 | 12 " | 18,6 |
| 22 | C 8/A1 C 4/A4 | 12 " | 20,8 |
| Vergleich | | | 30,9 |

+) Mittelwert aus 5 Zerreissversuchen, nach 4 Tagen Lagerung bei Raumtemperatur gemessen.

Beispiel 23

Mit dem ungesättigten Polyesterurethan C8/A1 werden Verklebungen bei 20 °C gemäss Beispiel 13 durchgeführt. Die erhaltenen Zugscherfestigkeitswerte der Verklebung betragen nach viertägiger Lagerung bei 20 °C 21, nach zusätzlicher Temperung bei 180 °C nach 1 Stunde 22 und nach 24 Stunden 29 N/mm² (Messung bei 20 °C).

**Patentansprüche**

1. Härtbare Masse auf der Grundlage von

A) mindestens einer ungesättigten, Estergruppen enthaltenden Verbindung mit freien Hydroxylgruppen,

B) mindestens einer polyfunktionellen Verbindung, die mindestens eine freie oder verkappte Isocyanatgruppe aufweist,

C) mindestens einem polymerisierbaren Vinylmonomeren,

D) mindestens einem, freie Radikale erzeugenden Polymerisationskatalysator und

E) mindestens einem Beschleuniger und gegebenenfalls weiteren üblichen Zusätzen,

dadurch gekennzeichnet, dass, bezogen auf die Summe A + B + C die Komponente A) in Mengen von 25 bis 80 Gewichtsprozent, die Komponente B) zu mindestens 3 Gewichtsprozent, die Komponente C) zu 7 bis 60 Gewichtsprozent, die Komponente D) in Mengen von 0,05 bis 5 Gewichtsprozent und die Komponente E) in Mengen von 0,01 bis 2 Gewichtsprozent enthalten sind und

die Summe des zur Herstellung von Polyesterurethanen A) verwendeten und des als Komponente B) eingebrachten Isocyanats jedoch 30 Gewichtsprozent nicht überschreiten soll und dass die Komponente A) ein ungesättigtes Polyesterurethan mit freien Hydroxylgruppen ist, das in einer Mehrstufenreaktion hergestellt worden ist, indem entweder α) zunächst ein Reaktionsprodukt I) mit einer Säurezahl unter 30, vorzugsweise unter 20 hergestellt wird, durch stufenweise Umsetzung von

a₁) mindestens einer, Hydroxylgruppen tragenden gesättigten Verbindung aus der Gruppe der Äthylenglykol- bzw. Propylenglykolpolyäther, Polyäther auf Epoxydharz- und Polyphenolbasis,

Polyestern auf Basis von aliphatischen oder aromatischen Polycarbonsäuren, wobei polymerisierte ungesättigte Fettsäuren eingeschlossen sind, mit zwei- bis vierwertigen Alkoholen und

natürlich vorkommenden Veresterungsprodukten OH-gruppenhaltiger, langkettiger gesättigter oder ungesättigter Fettsäuren mit dreiwertigen Alkoholen mit

a₂) mindestens 0,8 Mol mindestens eines un- gesättigten Polycarbonsäureanhydrids pro Hy- droxylgruppe

in erster Stufe zu einem Halbester und anschliessende Umsetzung des Halbesters in zweiter Stufe mit

a₃) mindestens einer Epoxyverbindung, wobei das Äquivalenzverhältnis von Epoxyd:COOH grösser als 1,1:1 ist (Reaktionsprodukt I) oder

β) durch Mischen dieses Reaktionsproduktes I) mit einem Reaktionsprodukt II), das seinerseits durch Veresterung von ungesättigten Polycarbonsäuren aus der Gruppe der Maleinsäure, Fumarsäure, Aconitsäure, Mesaconsäure, Citraconsäure, Itaconsäure und/oder Chlormaleinsäure und gegebenenfalls zusätzlichen gesättigten Polycarbonsäuren oder jeweils der möglichen Anhydride mit einem Überschuss von mehrwertigen Alkoholen, vorzugsweise zwei bis vierwertigen Alkoholen hergestellt worden ist, wobei mindestens einer der beiden Reaktionspartner von II) bifunktionell ist und gegebenenfalls der Überschuss der mehrwertigen Alkohole entfernt wird, eine Mischung hergestellt wird mit einem Anteil des Reaktionsproduktes II) von 1 bis 30 Gewichtsprozent bezogen auf die Gesamtmenge der Produkte I) und II)

und dass dann bis zu 20 Äquivalentprozent der in dem Reaktionsprodukt I) oder dessen Mischung mit Reaktionsprodukt II) enthaltenen OH-Gruppen mit Isocyanatgruppen tragenden polyfunktionellen Verbindungen umgesetzt werden.

2. Härtbare Masse nach Anspruch 1, dadurch gekennzeichnet, dass Reaktionsprodukt I) ein niedermolekulares Umsetzungsprodukt ist, hergestellt bei 60–150°C, aus einer Hydroxygruppen tragenden «gesättigten» Verbindung, die mindestens eine Estergruppe aufweist – vorzugsweise ein Umsetzungsprodukt aus Adipinsäure und Äthylenglykol – und mindestens einem ungesättigten Polycarbonsäureanhydrid, vorzugsweise Maleinsäureanhydrid, wobei auf eine Hydroxylgruppe 0,9–1,5 Mol Polycarbonsäureanhydrid eingesetzt wird und in dem die Umsetzung in der zweiten Stufe zur Herstellung des Reaktionsproduktes I) vorzugsweise unterhalb 100°C erfolgt.

3. Härtbare Masse nach Anspruch 1 oder 2, dadurch gekennzeichnet, dass die Komponente A aus einer Mischung des Reaktionsproduktes I) mit 3–10 Gewichtsprozent des Reaktionsproduktes II), bezogen auf die Gesamtmenge der Reaktionsprodukte I) und II) durch Umsetzung mit der Isocyanatgruppen enthaltenden Verbindung hergestellt wird.

4. Härtbare Masse nach einem oder mehreren der Ansprüche 1 bis 3, dadurch gekennzeichnet, dass zur Herstellung der Komponente A 5–15 Äquivalentprozent der in den Reaktionsprodukten I) und gegebenenfalls II) enthaltenen OH-Gruppen mit Isocyanatgruppen tragenden polyfunktionellen Verbindungen umgesetzt werden.

5. Härtbare Masse nach einem oder mehreren der Ansprüche 1 bis 4, dadurch gekennzeichnet, dass die in den Reaktionsprodukten I) und II) eingesetzte, Hydroxylgruppen tragende Verbindung hergestellt wurde durch Umsetzung mindestens einer Polycarbonsäure bzw. deren möglichen Anhydriden mit einem Überschuss mindestens eines mehrwertigen Alkohols im Verhältnis OH:COOH über 1,8:1 bis zu einer Säurezahl unter 6, und anschliessendes Entfernen des nicht gebundenen Alkohols bei einer Temperatur von nicht mehr als 160°C, vorzugsweise nicht mehr als 130°C bei normalem oder vermindertem Druck.

6. Verfahren zur Herstellung von Formkörpern, insbesondere Verklebungen, auf Basis der Komponenten A) bis E), wie in Anspruch 1 definiert, dadurch gekennzeichnet, dass man eine Mischung α aus den Komponenten A) bis D) mit einer Mischung β aus den Komponenten A), B), C) und E) vereinigt und zur Reaktion bringt.

7. Verfahren nach Anspruch 6, dadurch gekennzeichnet, dass eine Mischung α der Komponenten A), B), C) und D) auf eine der zu verklebenden Seiten eines Substrates und eine Mischung β aus den Komponenten A), B), C) und E) auf eine der zu verklebenden Seiten eines anderen Substrates aufgebracht wird und beide Substrate zusammengefügt werden, wobei die Mischungen α und β, deren Komponente B) nicht verkappte Isocyanatgruppen tragende Verbindungen enthält, jeweils mit einer 2-Komponentenspritzanlage aufgetragen werden und Mischungen α und β, deren Komponente B) aus vollständig verkappten Isocyanatgruppen tragenden Verbindungen besteht, vorzugsweise jeweils in einer 1-Komponentenspritzanlage aufgetragen werden.

8. Verfahren zur Herstellung von Verklebungen auf Basis der Komponenten A) bis E) wie in Anspruch 1 definiert, dadurch gekennzeichnet, dass die Komponente D) oder E) in je einem Teil der Monomeren C) gelöst werden, wobei die Viskosität der Lösung gegebenenfalls durch Zugabe eines Verdickungsmittels erhöht wird, die restlichen Komponenten der Gesamtmischung mit dem Rest der Komponente C) gesondert gemischt, beide Mischungen auf je eine der zu verklebenden Flächen aufgebracht und beide Substrate zusammengefügt werden.

9. Ausführungsform nach einem oder mehreren der Ansprüche 1 bis 8, dadurch gekennzeichnet, dass sie enthält

A) 40–70 Gew.-% ungesättigte Polyesterurethane,

B) 7–25 Gew.-% Isocyanatgruppen tragende polyfunktionelle Verbindungen,

C) 12–40 Gew.-% polymerisierbare Vinylmonomeren, insbesondere Acryl- und/oder Methacrylsäure in einem Anteil von bis zu 80, vorzugsweise 5–50 Gew.-%, bezogen auf die Gesamtmenge der Monomeren,

wobei sich die Komponenten A) bis C) zu 100 Gew.-% ergänzen und, bezogen auf diese Mischung,

D) 0,5–3,5 Gew.-% freie Radikale erzeugende Polymerisations-Katalysatoren und

E) 0,1–1 Gew.-% Beschleuniger

wobei die Summe des zur Herstellung von Polyesterurethanen A verwendeten und des als Komponente B eingebrachten Isocyanates jedoch 30 Gew.-% nicht überschreiten und vorzugsweise zwischen 10 und 25 Gew.-% liegen soll.

10. Verwendung der Masse nach einem oder mehreren der Ansprüche 1–5 sowie nach Anspruch 9 in Verbindung mit Anspruch 1–5 zur Herstellung von Formkörpern einschliesslich Überzügen, Haftschichten und Kittmassen.

**Claims**

1. Curable compound based on

A) at least one unsaturated, ester groups containing compound with free hydroxy groups,

B) at least one polyfunctional compound which contains at least one free or capped isocyanate group,

C) at least one polymerizable vinyl monomer,

D) at least one polymerization catalyst which forms free radicals and

E) at least one accelerator and optionally further usual additives, characterized in that component A) is present in amounts of from 25 to 80% by weight, component B) is present in an amount of at least 3% by weight, component C) is present in an amount of from 7 to 60% by weight, component D) is present in an amount of from 0.05 to 5% by weight and component E) is present in an amount of from 0.01 to 2% by weight, based on the sum of A) + B) + C), and that the sum of the isocyanate which has been used for the preparation of polyesterurethanes A) and that which has been added as component B) should not exceed 30% by weight, and that component A) is an unsaturated polyester urethane containing free hydroxy groups, which has been prepared in a reaction with several steps, either

α) by preparation in the first instance of a reaction product I) having an acid value below 30, preferably below 20 by reaction in several stages of

$a_1$) at least one, hydroxy groups containing saturated compound of the group of ethylene glycol polyether and propylene glycol polyether respectively, polyether based on epoxy resins and polyphenoles, polyesters based on aliphatic or aromatic polycarboxylic acids, which includes polymerized unsaturated fatty acids, with di- to tetrahydric alcohols and esterifications products of hydroxy groups containing, saturated or unsaturated fatty acids with long chains of natural source with trihydric alcohols with

$a_2$) at least 0.8 mols of at least one unsaturated polycarboxylic anhydride per hydroxy group in a first stage resulting a half ester, and subsequently reaction of the half ester in a second stage with

$a_3$) at least one epoxy compound in which the equivalent ratio of epoxide:COOH is greater than 1.1:1 (reaction product I) or

β) by mixing said reaction product I) with a reaction product II) which has been prepared by esterification of unsaturated polycarboxylic acids selected from the group of maleic acid, fumaric acid, aconitic acid, mesaconic acid, citraconic acid, itaconic acid and/or chlormaleic acid and optionally further saturated polycarboxylic acids or of the possible anhydrides with a surplus of polyhydric alcohols, preferably two- to tetrahydric alcohols, whereby at least one of the both reaction components of II) is bifunctional and whereby optionally the surplus of the polyhydric alcohols will be removed, forming a mixture with an amount of the reaction product II) of from 1 to 30% by weight, based on a total of the products I) and II)

and that further up to 20 equivalent percent of the hydroxy groups contained in the reaction product I) or in its mixture with reaction product II) is reacted with polyfunctional compounds containing isocyanate groups.

2. Curable compound according to claim 1, characterized in that the reaction product I) is a low molecular reaction product, prepared at 60 to 150 °C from a hydroxy group containing "saturated" compound which contains at least one ester group – preferably the reaction product of adipic acid and ethylene glycol – and at least one unsaturated polycarboxylic anhydride, preferably maleic anhydride, whereby 0.9 to 1.5 mol of the polycarboxylic anhydride is reacted with one hydroxy group and in which the reaction in the second stage for preparation of reaction product I) is carried out preferably at temperatures below 100 °C.

3. Curable compound according to claims 1 or 2, characterized in that component A) has been prepared of a mixture of the reaction product I) with 3 to 10% by weight of reaction product II), based on the total of reaction products I) and II) by reaction with the compound containing isocyanate groups.

4. Curable compound according to one or more of the claims 1 to 3, characterized in that for preparation of component A) 5 to 15 equivalent percent of the hydroxy groups of the reaction products I) and optionally II) are reacted with polyfunctional compounds containing isocyanate groups.

5. Curable compound according to one or more of the claims 1 to 4, characterized in that the hydroxyl group containing compound of the reaction products I) and II) has been prepared by a reaction of at least one polycarboxylic acid and its possible anhydrides respectively with a surplus of at least one polyhydric alcohol in a ratio of OH:COOH of more than 1.8:1, the reaction has been carried out until an acid value below 6 has been maintained, followed by additional removal of the non-bound alcohol at a temperature of no more than 160 °C, preferably of no more than 130 °C at atmospheric or reduced pressure.

6. Process for the preparation of shaped articles, especially glued joins based on components A) to E), as defined in claim 1, characterized in that a mixture α of the components A) to D) has been combined with a mixture β of the components A), B), C) and E) followed by reaction.

7. Process according to claim 6, characterized in that a mixture α of the components A), B), C) and D) has been applied to one side of a substrate and a mixture β of the components A), B), C) and E) has been applied to one side of another substrate, both substrates have been joined together whereby the mixtures α and β, in which component B) contains compounds with uncapped isocyanate groups, will be applied with a two component spraying apparatus in each case and whereby the mixtures α and β in which component B) contains isocyanate groups containing compounds, which are totally capped, will be applied preferably in a one component spraying apparatus in each case.

8. Process for the preparation glued joins based on components A) to E) as defined in claim 1, characterized in that components D) or E) are dissolved in one part of monomers C) each, whereby the viscosity of the solution is raised optionally by addition of a thickening agent, the remaining components of the total mixture have been mixed with the residue of the component C) separately, both mixtures will be applied to each one of the surface to be glued and both substrates will be joined together.

9. Embodiment according to one or more of the claims 1 to 8, characterized in that it contains A) 40 to 70% by weight of unsaturated polyester urethanes, B) 7 to 25% by weight of polyfunctional compounds carrying isocyanate groups, C) 12 to 40% by weight of polymerizable vinyl monomers, especially acrylic and/or methacrylic acid in an amount of up to 80, preferably 5 to 50% by weight, based on the total of the monomers, wherein the components A) to C) are added up to 100% by weight and, based on this mixture, D) 0.5 to 3.5% by weight of polymerization catalysts forming free radicals and E) 0.1 to 1% by weight of an accelerator, wherein the sum of the isocyanate used for the preparation of polyester urethanes A) and added as component B) will not exceed 30% by weight and is preferably between 10 and 25% by weight.

10. Use of the compound according to one or more of the claims 1 to 5 and according to claim 9 in combination with claims 1 to 5 for the preparation of shaped bodies inclusive coatings, adhesives and cements.

**Revendications**

1. Matière durcissable à base de:

A) un ou plusieurs composés insaturés à groupes esters, avec hydroxyles libres,

B) un ou plusieurs composés polyfonctionnels ayant au moins un groupe isocyanate libre ou masqué,

C) un ou plusieurs monomères vinyliques polymérisables,

D) un ou plusieurs catalyseurs de polymérisation donnant des radicaux libres et

E) un ou plusieurs accélérateurs et le cas échéant d'autres additifs courants,

matière caractérisée en ce que, par rapport à la somme A+B+C, la composante A) est dans des proportions de 25 à 80% en poids, la composante B) dans une proportion d'au moins 3% en poids, la composante C) dans une proportion de 7 à 60% en poids, la composante D) dans une proportion de 0,05 à 5% en poids et la composante E) dans une proportion de 0,01 à 2% en poids, et la somme de l'isocyanate servant à former les polyesters-uréthannes A) et de l'isocyanate ajouté comme composante B) ne dépasse cependant pas 30% en poids, et en ce que la composante A) est un polyester-uréthanne insaturé avec des hydroxyles libres, qui a été formé par une réaction en plusieurs étapes dans laquelle, ou bien

α) on commence par préparer un produit de réaction I) d'un indice d'acide inférieur à 30, de préférence inférieur à 20, par réaction en étapes de:

a₁) un ou plusieurs composés saturés à groupes hydroxyliques, pris parmi des polyéthers de l'éthylène-glycol et/ou du propylène-glycol, des polyéthers à base de résines époxydes et de polyphénols, des polyesters d'acides polycarboxyliques aliphatiques ou aromatiques, y compris des acides gras insaturés polymérisés, et d'alcools divalents à tétravalents, et des produits d'estérification d'origine naturelle d'acides gras saturés ou insaturés à longue chaîne, à groupes OH, par des alcools trivalents, avec

a₂) au moins 0,8 mole d'un ou de plusieurs anhydrides d'acides polycarboxyliques insaturés par hydroxyle dans la première étape pour former un semi-ester, puis réaction de celui-ci dans une seconde étape avec

a₃) un ou plusieurs composés époxydiques, le rapport en équivalents époxyde:COOH étant supérieur à 1,1 (produit de réaction I), ou bien

β) en mélangeant ce produit de réaction I) avec un produit de réaction II) qui a été obtenu par estérification d'acides polycarboxyliques insaturés du groupe des acides maléique, fumarique, aconitique, mésaconique, citraconique, itaconique et/ou chloromaléique et le cas échéant d'autres acides polycarboxyliques saturés ou de leurs anhydrides possibles, avec un excès de polyols, de préférence d'alcools divalents à tétravalents, l'un au moins des deux réactifs du produit II) étant bifonctionnel, et éventuellement en éliminant l'excès des polyols, on prépare un mélange dans une proportion du produit II) de 1 à 30% du poids total des produits I) et II),

puis on fait réagir jusqu'à 20% d'équivalents des groupes OH du produit de réaction I), ou de son mélange avec le produit de réaction II), avec des composés polyfonctionnels à groupes isocyanate.

2. Matière durcissable selon la revendication 1, caractérisée en ce que le produit de réaction I) est un produit à faible masse moléculaire qui a été formé entre 60 et 150°C à partir d'un composé «saturé» à groupes hydroxyliques et au moins un groupe ester (de préférence un produit de réaction de l'acide adipique avec l'éthylène-glycol), et d'un ou de plusieurs anhydrides d'acides polycarboxyliques insaturés, de préférence l'anhydride maléique, avec de 0,9 à 1,5 mole d'anhydride par groupe hydroxylique, et la réaction de la seconde étape pour préparer le produit de réaction I) se fait de préférence au-dessous de 100°C.

3. Matière durcissable selon la revendication 1 ou 2, caractérisée en ce que l'on prépare la composante A à partir d'un mélange du produit de réaction I) avec 3 à 10% en poids du produit de réaction II), par rapport à la quantité totale des produits de réaction I) et II), par réaction avec le composé à groupes isocyanate.

4. Matière durcissable selon une ou plusieurs des revendications 1 à 3, caractérisée en ce que pour préparer la composante A on fait réagir de 5 à 15% d'équivalents des groupes OH du produit de réaction I) et le cas échéant du produit de réaction II) avec les composés polyfonctionnels à groupes isocyanate.

5. Matière durcissable selon une ou plusieurs des revendications 1 à 4, caractérisée en ce que l'on prépare le composé à groupes hydroxyliques des produits de réactions I) et II) par réaction d'un ou de plusieurs acides polycarboxyliques ou de leurs anhydrides possibles avec un excès d'un ou de plusieurs polyols dans un rapport OH:COOH supérieur à 1,8 jusqu'à un indice d'acide inférieur à 6, puis élimination de l'alcool non lié à une température ne dépassant pas 160°C, de préférence ne dépassant pas 130°C, à la pression normale ou sous pression réduite.

6. Procédé d'obtention d'objets moulés, notamment de collages, à base des composantes A) à E) telles qu'elles ont été définies à la revendication 1, procédé caractérisé en ce que l'on réunit un mélange (α) des composantes A) à D) avec un mélange (β) des composantes A), B), C) et E), et on fait réagir.

7. Procédé selon la revendication 6, caractérisé en ce que l'on applique un mélange (α) des composantes A), B), C) et D) sur l'un des côtés à coller d'un substrat et un mélange (β) des composantes A), B), C) et E) sur le côté à coller d'un autre substrat puis on accole les deux substrats, les mélanges (α) et (β), dont la composante B) comprend des composés à groupes isocyanate non masqués, étant appliqués avec un dispositif de pulvérisation à deux composantes, et les mélanges (α) et (β) dont la composante B) est formée de composés à groupes isocyanate entièrement masqués étant appliqués de préférence avec un dispositif de pulvérisation à une seule composante.

8. Procédé de formation de collages à base des composantes A) à E) telles que définies à la revendication 1, procédé caractérisé en ce que l'on dissout la composante D) ou E) dans une partie des monomères C), on élève éventuellement la viscosité de la solution en ajoutant un épaississant, on mélange à part les composantes restantes du mélange global avec la partie restante de la composante C), on applique les deux mélanges respectivement sur les surfaces à coller puis on accole les deux substrats.

9. Mode de réalisation d'une ou de plusieurs des revendications 1 à 8, caractérisé en ce que la matière contient

A) 40 à 70% en poids de polyesters-uréthannes insaturés,

B) 7 à 25% en poids de composés polyfonctionnels à groupes isocyanate,

C) 12 à 40% en poids de monomères vinyliques polymérisables, en particulier d'acide acrylique et/ou méthacrylique, dans une proportion pouvant s'élever jusqu'à 80%, de préférence de 5 à 50%, du poids total des monomères,

les composantes A) à C) représentant 100% du poids du mélange,

D) 0,5 à 3,5% en poids de catalyseurs de polymérisation donnant des radicaux libres, et

E) 0,1 à 1% en poids d'accélérateurs

la somme de l'isocyanate pour former les polyesters-uréthannes A et de l'isocyanate ajouté comme composante B ne devant cependant pas dépasser 30% en poids et étant comprise de préférence entre 10 et 25% en poids.

10. Utilisation des matières selon une ou plusieurs des revendications 1 à 5, et selon la revendication 9 conjointement avec les revendications 1 à 5, pour la formation d'objets moulés, y compris de revêtements couches adhésives et mastics ou ciments.